# FASCICULE DE BREVET EUROPEEN

(11) **EP 4 352 454 B1**
(45) Date de publication et mention de la délivrance du brevet: **16.07.2025**
(21) Numéro de dépôt: 22789253.6
(22) Date de dépôt: 06.09.2022
(51) Int. Cl.: G01C 11/02, B64G 1/10, G03B 37/02, H04N 25/70, G03B 17/17

(54) **SYSTEME D'IMAGERIE A BALAYAGE POUR SAISIR DES IMAGES SELON DEUX VALEURS D'INCLINAISON DE LIGNE DE VISEE**
ABTASTENDES ABBILDUNGSSYSTEM ZUR BILDERFASSUNG GEMÄSS ZWEI SICHTLINIENNEIGUNGSWERTEN
SCANNING IMAGING SYSTEM FOR CAPTURING IMAGES ACCORDING TO TWO LINE-OF-SIGHT INCLINATION VALUES

(30) Priorité: 21.09.2021 FR 2109911
(43) Date de publication de la demande: 17.04.2024
(73) Titulaire: Airbus Defence and Space SAS, 31402 Toulouse Cedex 4 (FR)
(72) Inventeur: PASTERNAK, Frédéric, 31402 TOULOUSE CEDEX 4 (FR)
(74) Mandataire: Plasseraud IP
(86) Numéro de dépôt international: PCT/FR2022/051683
(87) Numéro de publication internationale: WO 2023/047036

(56) Documents cités:
- CN-A- 110 657 782
- US-A1- 2019 084 698
- US-A1- 2020 191 568
- EDWARDS T ET AL: "THE ALONG TRACK SCANNING RADIOMETER-MEASUREMENT OF SEA-SURFACE TEMPERATURE FROM ERS-1", JOURNAL OF THE BRITISH INTERPLANETARY SOCIETY, BRITISH INTERPLANETARY SOCIETY, LONDON, GB, vol. 43, no. 4, 1 April 1990 (1990-04-01), pages 160 - 180, XP000141983, ISSN: 0007-084X

## Description

### Domaine technique

La présente description concerne un système d'imagerie à balayage pour saisir des images selon deux valeurs d'inclinaison de la ligne de visée. Elle concerne aussi un procédé de saisie d'images de portions de la surface d'une planète, notamment pour obtenir des valeurs de température de cette surface de planète en tenant compte de l'absorption variable du rayonnement par l'atmosphère de la planète.

### Technique antérieure

De nombreuses missions spatiales ont déjà eu parmi leurs buts de caractériser la surface de la Terre, dans des zones d'océan ou de terre ferme. En particulier, des instruments d'imagerie ont été embarqués à bord de satellites mis en orbite autour de la Terre, ces instruments étant sensibles au rayonnement thermique qui est émis par la surface de la Terre. La température de la surface de la Terre, pour une portion élémentaire de cette surface qui est ainsi imagée, est déduite de l'intensité qui est mesurée pour le rayonnement thermique en provenance de cette portion de surface élémentaire. Une image thermique d'une portion plus grande de la surface de la Terre est ensuite obtenue par balayage, en répétant des mesures d'intensité de rayonnement thermique pendant que la ligne de visée de l'instrument d'imagerie est déplacée progressivement par rapport à la surface de la Terre, pour pointer vers des portions élémentaires variables de cette surface.

Mais l'atmosphère qui est présente au-dessus de chaque portion de surface de la Terre provoque une absorption partielle du rayonnement thermique entre la surface de la Terre et le satellite, ainsi qu'une émission supplémentaire de rayonnement thermique, qui sont variables. Cette absorption et cette émission supplémentaire dépendent notamment de la concentration locale d'aérosols dans l'atmosphère. Elles ne sont donc pas connues a priori et, à cause de cela, la température d'une portion identifiée dans la surface de la Terre ne peut pas être déterminée à partir d'une seule mesure du rayonnement thermique qui provient de cette portion. Plusieurs missions spatiales ont alors surmonté cette difficulté en réalisant deux mesures de rayonnement thermique pour chaque portion de surface terrestre, selon deux valeurs différentes de l'inclinaison de la ligne de visée de l'instrument d'imagerie par rapport à la surface terrestre. Il est alors possible de supprimer numériquement les effets d'absorption et d'émission du rayonnement thermique par l'atmosphère en combinant les résultats des deux mesures d'intensité qui ont été effectuées pour chaque portion de la surface terrestre, et d'en déduire la température de surface de l'océan ou de la terre ferme dans chaque portion considérée.

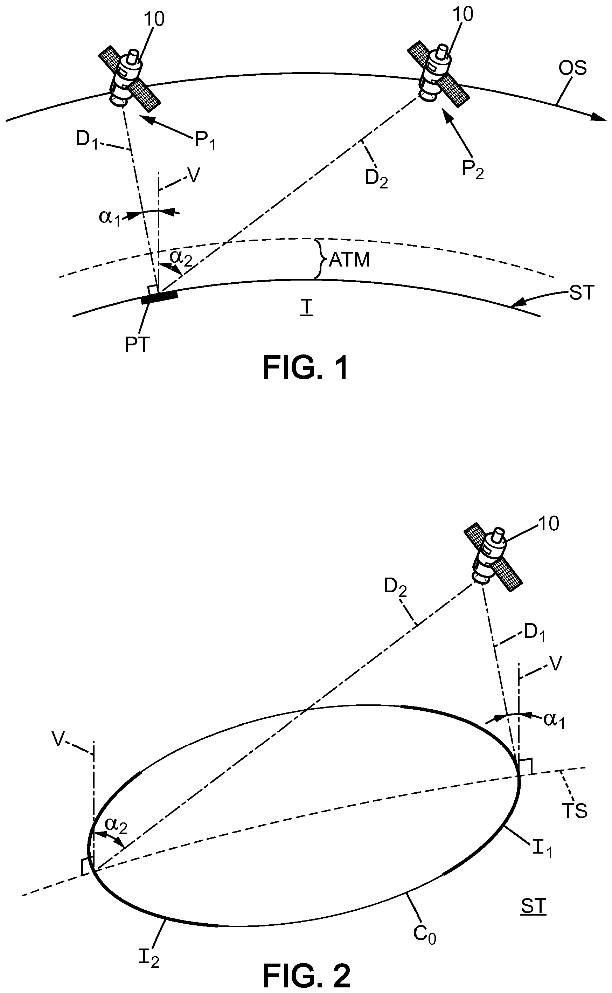

Afin de réaliser les deux valeurs différentes de l'inclinaison de la ligne de visée par rapport à la surface terrestre, un dispositif de balayage a été associé à l'optique de formation d'image, pour dévier la ligne de visée de l'ensemble du système d'imagerie ainsi constitué selon un mouvement en boucle fermée qui est répété périodiquement. Dans les premières versions de ce type de systèmes, le dispositif de balayage est constitué par un miroir plan rotatif, qui est incliné par rapport à son axe de rotation. Le miroir est alors entrainé pendant la mission selon un mouvement continu de rotation à sens de rotation constant. Un tel fonctionnement de balayage est favorable par rapport à de nombreuses difficultés posées par un mouvement de type va-et-vient. Les deux mesures pour chaque portion de surface terrestre sont alors effectuées pour deux directions différentes de la ligne de visée qui sont produites lors du mouvement périodique de cette ligne de visée, à des instants différents du défilement du satellite sur son orbite tels que les deux mesures soient relatives à la même portion dans la surface terrestre. [Fig. 1] illustre une telle réalisation des deux mesures. Le plan de cette figure est celui de l'orbite du satellite. T désigne la Terre, ST sa surface, PT une portion de cette surface qui est visée pour les deux mesures, la référence 10 désigne le satellite, et OS est l'orbite du satellite 10 orientée dans le sens du déplacement de ce satellite. D₁ et D₂ désignent les deux directions de la ligne de visée du système d'imagerie embarqué à bord du satellite 10, qui pointent vers la portion PT, et P₁ et P₂ sont les positions où se trouve le satellite 10 au moment de chaque mesure. Pour satisfaire les prescriptions imposées pour ce type de mesures, la ligne de visée peut former un premier angle qui est faible avec la direction verticale locale V pour l'une des deux mesures, par exemple l'angle α₁ est inférieur à 10° (degré) pour la direction de ligne de visée D₁, et un second angle α₂ proche de 50° pour l'autre mesure selon la direction de ligne de visée D₂. Ainsi, l'atmosphère terrestre ATM est traversée par la ligne de visée au niveau de la portion de surface terrestre PT selon les deux directions D₁ et D₂, avec un écart angulaire entre celles-ci qui est conforme à une prescription de mission.

[Fig. 2] montre la trajectoire de la ligne de visée sur la surface terrestre ST lors d'une révolution du dispositif de balayage. Cette trajectoire, noté C₀, comprend deux intervalles utiles de variation continue de la ligne de visée, notés I₁ et I₂, chacun sensiblement en forme d'arc, et qui s'étendent respectivement de part et d'autre de la direction D₁ de la ligne de visée et de part et d'autre de la direction D₂, telles que ces directions ont été définies ci-dessus. TS désigne la trace du satellite 10 sur la surface ST de la Terre. A cause des courbures des deux intervalles utiles I₁ et I₂, il n'est pas possible de disposer des alignements rectilignes de photodétecteurs dans le plan focal de l'optique de formation d'image, pour que l'image d'une même portion de la surface terrestre ST se déplace le long de cet alignement rectiligne pendant une révolution du dispositif de balayage et en même temps que le satellite défile sur son orbite. Pour cette raison, il est impossible d'utiliser des capteurs d'images du type à intégration par décalage temporel, ou TDI pour «Time-Delay Integration» en anglais. L'intensité du rayonnement qui est mesurée pour chaque portion de la surface terrestre est alors fortement limitée par la vitesse du balayage, et peut être insuffisante pour déterminer la température de surface de la Terre avec une précision élevée. Dans le jargon de l'Homme du métier, la possibilité de saisir le rayonnement qui provient d'un même endroit de scène successivement par deux photodétecteurs distincts qui sont situés dans le plan focal, est appelée coregistration spatiale.

De même, parce que les portions de la surface terrestre qui sont visées à des instants successifs ne sont pas décalées entre elles de façon constante à l'intérieur de chaque intervalle utile I₁, I₂, il n'est pas possible non plus de saisir le rayonnement qui est issu de chaque portion PT sélectivement dans plusieurs fenêtres spectrales distinctes en utilisant des filtres spectraux qui sont situés dans le plan focal. Cette possibilité de saisir le rayonnement provenant d'un même endroit de scène selon des fenêtres spectrales différentes, est appelée coregistration spectrale. Elle permettrait une plus grande précision pour la valeur de la température de surface terrestre qui est déterminée par ce type de systèmes d'imagerie à double-mesure.

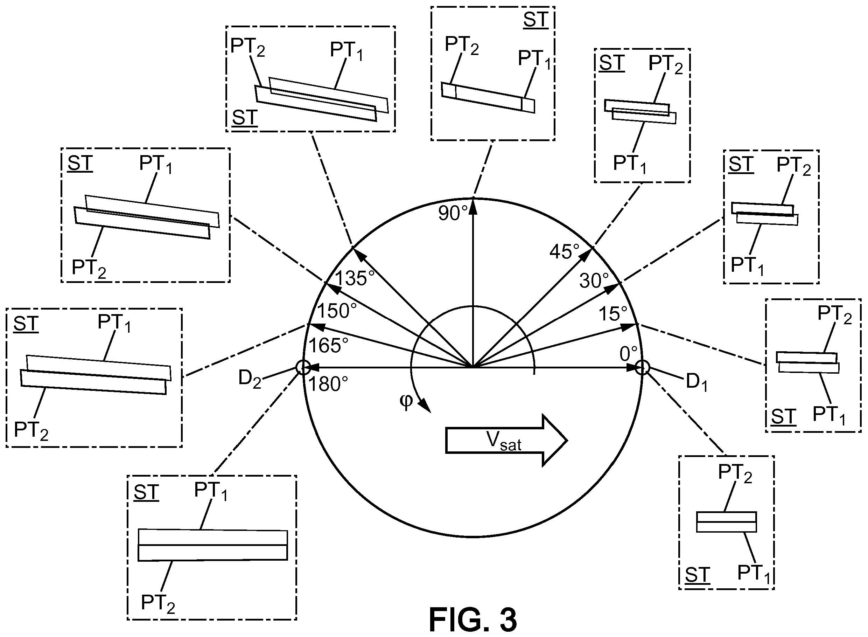

[Fig. 3] montre les décalages qui existent entre deux portions de surface terrestre qui sont saisies successivement en images au moyen d'un tel instrument d'imagerie utilisé avant la présente invention. La flèche Vₛₐₜ désigne la vitesse de défilement du satellite 10 telle qu'elle apparaît en projection sur la surface ST de la Terre. L'angle φ qui est indiqué dans cette figure repère la position du dispositif de balayage rotatif. La valeur nulle pour cet angle φ correspond à la direction D₁ de la ligne de visée telle qu'introduite précédemment, et la valeur de 180° pour ce même angle φ correspond à la direction D₂. Une portion élémentaire de scène, c'est-à-dire de la surface ST de la Terre pour l'application décrite précédemment, qui est imagée dans un rectangle allongé fixe du plan focal de l'optique de formation d'image est représentée pour les valeurs 0°, 15°, 30°, 45°, 90°, 135°, 150°, 165° et 180° de l'angle φ, en étant désignée par la référence PT₁. Par exemple, le rectangle allongé qui est ainsi considéré dans le plan focal correspond à une bande de 120 km (kilomètre) par 20 km sur la surface ST de la Terre pour la direction D₁ de la ligne de visée. Pour chacune de ces valeurs de l'angle φ, la référence PT₂ montre la position dans la surface ST de la Terre, de la portion de celle-ci qui est imagée dans le même rectangle du plan focal pour l'image suivante qui est saisie. Comme cela est visible dans [Fig. 3], la portion de surface terrestre PT₂ est décalée par rapport à la portion PT₁ parallèlement aux grands côtés de ces portions, de plus en plus à partir de φ=0° jusqu'à φ=90°, puis ce décalage longitudinal des deux portions PT₁ et PT₂ l'une par rapport à l'autre diminue progressivement entre les valeurs 90° et 180° pour l'angle φ, en s'annulant de nouveau pour φ=180°. Le décalage longitudinal entre les deux portions de surface terrestre PT₁ et PT₂ est donc variable pendant toute la rotation du dispositif de balayage, et n'est nul que pour les deux directions D₁ et D₂. Il empêche par conséquent de réaliser une coregistration spatiale des images qui sont saisies successivement en dehors de ces deux directions D₁ et D₂.

Des versions ultérieures de systèmes d'imagerie à balayage pour saisir en images des portions de la surface terrestre chacune selon deux valeurs différentes d'inclinaison de la ligne de visée sont encore incapables de coregistration spatiale, et aussi incapables de coregistration spectrale à l'intérieur d'un plan focal unique.

Par ailleurs, il est connu d'effectuer des mesures de calibration de tels systèmes d'imagerie qui sont utilisés pour déterminer la température de surface terrestre, à chaque révolution du dispositif de balayage. Ces mesures de calibration sont effectuées à des instants où la ligne de visée est en dehors des deux intervalles utiles I₁ et I₂. Pour cela, une ou deux source(s) de rayonnement est (sont) embarquée(s) à bord du satellite 10, et couplées au système d'imagerie pour que du rayonnement qui est produit par l'une ou l'autre de ces sources traverse l'optique de formation d'image et parvienne au(x) photodétecteur(s) à des instants pour lesquels la ligne de visée est dirigée en dehors des intervalles utiles I₁ et I₂ par le dispositif de balayage. Il est ainsi possible de disposer d'une calibration des mesures de rayonnement thermique qui est régulièrement réactualisée au cours de la mission de mesure de température, voire à chaque révolution du système de balayage.

Le document de littérature non-brevet "Edwards T et al: "The along track scanning radiometer-measurement of sea-surface temperature from ERS-1", JOURNAL OF THE BRITISH INTERPLANETARY SOCIETY, BRITISH INTERPLANETARY SOCIETY, London, GB, vol. 43, no. 4" décrit un système d'imagerie à balayage destiné à être embarqué à bord d'un satellite en orbite autour d'une planète, pour saisir des images de portions de surface de la planète selon deux valeurs différentes d'inclinaison d'une ligne de visée du système d'imagerie par rapport à ladite portion de surface de la planète.

Le document US 2019/084698 A1 décrit un système d'imagerie satellite à balayage à ligne de visée variable et utilisant un capteur/photodétecteur de type CCD à intégration par décalage temporel.

### Problème technique

A partir de cette situation, un but de la présente invention est de proposer un nouveau système d'imagerie à double inclinaison de la ligne de visée pour chaque portion de scène, qui permette de saisir le rayonnement qui provient d'une même portion de scène successivement par plusieurs photodétecteurs pour chacune des deux inclinaisons de la ligne de visée. Autrement dit, le système d'imagerie recherché doit permettre une coregistration spatiale.

Un but supplémentaire de l'invention est qu'une vitesse de révolution du dispositif de balayage soit réduite, pour diminuer l'usure de ce dispositif et augmenter la durée de vie de l'ensemble du système d'imagerie.

Un autre but supplémentaire de l'invention consiste à collecter une quantité de rayonnement qui soit plus importante en provenance de chaque portion de scène, par rapport aux systèmes de l'art antérieur.

Encore un autre but supplémentaire de l'invention est de procurer une coregistration spectrale. Dans ce cas, il est souhaité que le système d'imagerie de l'invention soit compatible avec une séparation spectrale qui est réalisée dans le plan focal.

Enfin, encore un autre but supplémentaire de l'invention est de procurer une calibration plus précise des mesures d'intensité de rayonnement thermique qui sont effectuées en utilisant le système d'imagerie.

### Résumé de l'invention

Pour atteindre l'un au moins de ces buts ou un autre, un premier aspect de l'invention propose un nouveau un système d'imagerie à balayage, selon la revendication 1, qui est destiné à être embarqué à bord d'un satellite en orbite autour d'une planète, pour saisir des images de portions de surface de cette planète, chaque portion de surface de la planète étant saisie en images selon deux valeurs différentes d'inclinaison d'une ligne de visée du système d'imagerie par rapport à cette portion de surface de la planète. Ce système d'imagerie de l'invention comprend :
- une optique de formation d'image, qui est adaptée pour former une image dans un plan focal ;
- au moins un capteur d'images, qui est disposé dans le plan focal ;
- un dispositif de balayage, qui est adapté pour varier la ligne de visée du système d'imagerie selon un mouvement en boucle fermée et à sens de parcours constant, répété périodiquement, avec au moins deux intervalles utiles de variation continue de la ligne de visée dans chaque répétition du mouvement de la ligne de visée, qui sont disjoints, de sorte que des images soient formées sur le capteur d'images qui correspondent alternativement à l'un puis à l'autre des deux intervalles utiles de variation continue de la ligne de visée ; et
- un contrôleur, qui est configuré pour contrôler le capteur d'images de façon à réaliser une séquence respective de saisie d'image pour chacun des deux intervalles utiles de variation continue de la ligne de visée, et pour chaque répétition du mouvement de la ligne de visée pendant un défilement du satellite au-dessus de la surface de la planète, de sorte qu'une même portion de surface de la planète soit saisie en image deux fois, une première fois lorsque la ligne de visée est dans l'un des deux intervalles utiles, correspondant à une des valeurs d'inclinaison de la ligne de visée par rapport à la portion considérée de surface de la planète, et une seconde fois lorsque la ligne de visée est dans l'autre des deux intervalles utiles, correspondant à l'autre des valeurs d'inclinaison de la ligne de visée par rapport à la même portion de surface de la planète, les deux fois pouvant être produites lors de répétitions différentes du mouvement de la ligne de visée.

Selon l'invention, le capteur d'images comprend au moins une colonne rectiligne de photodétecteurs adjacents qui est contenue dans le plan focal, et le mouvement de la ligne de visée est adapté de sorte que, lors d'une utilisation du système d'imagerie à bord du satellite, l'image de la portion de la surface de la planète qui est formée dans le plan focal pour chaque intervalle utile de variation continue de la ligne de visée se déplace parallèlement à la colonne des photodétecteurs. Autrement dit, le mouvement de la ligne de visée qui est produit par le dispositif de balayage est conçu pour que l'image d'une portion de la surface de la planète se déplace rectilignement dans le plan focal. Ainsi, plusieurs photodétecteurs, c'est-à-dire au moins deux photodétecteurs, sont disposés dans le plan focal selon la direction de ce déplacement, en formant une colonne rectiligne qui est parallèle à cette direction de déplacement. Grâce à une telle configuration rectiligne et parallèle entre la colonne de photodétecteurs et le déplacement de l'image dans le plan focal, des séquences de saisie d'intensité de rayonnement peuvent être effectuées par plusieurs photodétecteurs de façon décalée temporellement, lorsque l'image de la même portion de surface de planète passe successivement sur chacun d'eux. Autrement dit, le système d'imagerie de l'invention est conçu pour permettre une coregistration spatiale. Par exemple, la ou chaque colonne de photodétecteurs peut contenir de deux à vingt photodétecteurs adjacents et alignés rectilignement dans le plan focal.

En particulier, le mouvement de la ligne de visée peut être compris entre deux cônes qui ont des demi-angles d'ouverture au sommet différents, la ligne de visée étant sur celui des deux cônes qui possède le plus petit demi-angle d'ouverture au sommet à deux positions de la ligne de visée au cours de son mouvement où elle coupe la projection de l'orbite du satellite sur la surface de la planète. Ces deux positions appartiennent une-à-une aux deux intervalles utiles de variation continue de la ligne de visée. La ligne de visée est alors sur l'autre des deux cônes, qui possède le plus grand demi-angle d'ouverture au sommet, à au moins une autre position qui est située entre les deux intervalles utiles de variation continue de la ligne de visée. Les demi-angles d'ouverture au sommet des deux cônes peuvent être compris entre 20° et 40° pour le plus petit, et entre 60° et 80° pour le plus grand.

Le dispositif de balayage peut en outre être adapté pour qu'une vitesse angulaire de balayage qui est produite par ce dispositif soit variable. De cette façon, un déplacement dans le plan focal du contenu d'image tel que produit par l'optique de formation d'image peut être synchronisé par rapport à des instants auxquels les images sont saisies successivement par le capteur d'images.

Selon un premier perfectionnement possible de l'invention, le capteur d'images peut comprendre plusieurs colonnes rectilignes et parallèles de photodétecteurs adjacents qui sont contenues dans le plan focal, avec une direction de lignes des photodétecteurs qui est perpendiculaire aux colonnes. La direction de lignes peut alors être sensiblement parallèle à l'image dans le plan focal de la projection du défilement du satellite sur la surface de la planète, notamment si le mouvement de la ligne de visée qui est produit par le dispositif de balayage est beaucoup plus rapide que le défilement du satellite. De façon générale, l'utilisation de plusieurs colonnes adjacentes de photodétecteurs permet de réduire la vitesse du mouvement de la ligne de visée en fonction du nombre des colonnes, sans que des intervalles soient manqués dans la surface de la planète entre deux répétitions du mouvement de la ligne de visée, par rapport à une réalisation de l'invention à une seule colonne et pour laquelle les traces de balayage sont contigües à la surface de la planète. Typiquement, la vitesse du mouvement de la ligne de visée peut sensiblement être divisée par le nombre des colonnes adjacentes. L'usure du dispositif de balayage est ainsi fortement diminuée, et la durée de vie de l'ensemble du système d'imagerie augmentée en conséquence. L'ensemble des photodétecteurs forment alors un agencement matriciel dans le plan focal. Par exemple, cet agencement peut contenir de plusieurs dizaines à plusieurs centaines de colonnes adjacentes, c'est-à-dire de vingt à cent cinquante photodétecteurs adjacents par ligne.

Avantageusement, le capteur d'images peut être du type à intégration par décalage temporel, ou TDI, avec une direction d'accumulation à décalage temporel qui est parallèle aux colonnes. Ainsi, des collectes de rayonnement en provenance d'une même portion élémentaire de la surface de la planète peuvent être cumulées sur plusieurs photodétecteurs, d'une façon interne au capteur d'images. Une précision supérieure est ainsi obtenue dans la mesure d'intensité de rayonnement.

Selon un second perfectionnement possible de l'invention, le système d'imagerie peut comprendre plusieurs capteurs d'images qui sont disposés dans le plan focal, chaque capteur d'images comprenant au moins une colonne rectiligne de photodétecteurs adjacents qui est contenue dans ce plan focal. L'image de la portion de la surface de la planète qui est formée dans le plan focal pour chaque intervalle utile de variation continue de la ligne de visée se déplace alors parallèlement à la colonne de photodétecteurs de chacun des capteurs d'images. En particulier, les capteurs d'images peuvent être décalés entre eux parallèlement aux colonnes de chacun d'eux, de sorte que le déplacement de l'image d'une même portion de la surface de la planète passe d'une colonne de photodétecteurs de l'un des capteurs d'images à une colonne de photodétecteurs d'un autre des capteurs d'images lors d'une même répétition du mouvement en boucle fermée à sens de parcours constant de la ligne de visée, pour chacun des intervalles utiles de variation continue de la ligne de visée. Le système d'imagerie peut alors comprendre en outre des filtres spectraux qui sont associés respectivement aux capteurs d'images, et qui déterminent des fenêtres spectrales différentes. Une coregistration spectrale est ainsi obtenue. De cette façon, des images d'une première portion de la surface de la planète sont saisies pour toutes les fenêtres spectrales lorsque la ligne de visée est dans l'un des deux intervalles utiles de variation continue de la ligne de visée, et des images d'une seconde portion de la surface de la planète sont saisies aussi pour toutes les fenêtres spectrales lorsque la ligne de visée est dans l'autre des deux intervalles utiles de variation continue de la ligne de visée, à chaque répétition du mouvement de de la ligne de visée. En combinant ce fonctionnement avec les séquences de saisie d'images qui sont réalisées à des instants différents du défilement du satellite sur son orbite, chaque portion de surface de la planète est saisie en images selon deux valeurs d'inclinaison de la ligne de visée, et pour chacune de ces valeurs selon toutes les fenêtres spectrales des filtres.

Lorsqu'un tel second perfectionnement est utilisé, les filtres spectraux peuvent être situés juste au-dessus des capteurs d'images, un filtre spectral par capteur d'images. La séparation spectrale est ainsi réalisée au niveau du plan focal, si bien que l'ensemble du système d'imagerie peut posséder une architecture plus simple, par rapport à des architectures à duplication de plan focal telles que réalisées en utilisant un ou plusieurs séparateur(s) dichroïque(s).

Selon un troisième perfectionnement possible de l'invention, le dispositif de balayage peut être adapté pour diriger la ligne de visée à au moins une position au cours du mouvement en boucle fermée et à sens de parcours constant, entre les deux intervalles utiles de variation continue de la ligne de visée, vers l'espace en dehors d'un limbe de la planète lors de l'utilisation du système d'imagerie à bord du satellite. Le contrôleur peut alors être configuré pour contrôler le ou l'un au moins des capteur(s) d'images de façon à réaliser une séquence supplémentaire de saisie d'image pour cette position de la ligne de visée vers l'espace. Cette séquence supplémentaire peut alors constituer une calibration du système d'imagerie, qui est effectuée à partir du rayonnement spatial, et qui est disponible tout au long de l'utilisation du système d'imagerie à bord du satellite. Une telle calibration peut être particulièrement utile pour améliorer une précision de détermination de température qui est effectuée à partir des images saisies.

Possiblement, le système d'imagerie de l'invention peut comprendre en outre une source de rayonnement à fonction de calibration interne, qui est disposée de sorte que la ligne de visée telle que déplacée par le système de balayage soit dirigée vers cette source de rayonnement à au moins une autre position au cours du mouvement en boucle fermée et à sens de parcours constant, aussi entre les deux intervalles utiles de variation continue de la ligne de visée. Une autre calibration peut ainsi être effectuée, qui est interne au système d'imagerie tel qu'embarqué à bord du satellite. Avantageusement, cette autre position de la ligne de visée, qui est dédiée à la calibration interne, peut être située à l'opposé de la position dédiée à la calibration sur fond spatial, dans le mouvement en boucle fermée qui est produit par le dispositif de balayage.

Selon l'invention, le dispositif de balayage comprend un miroir mobile ou un ensemble mobile de miroirs, et est adapté pour faire tourner ce miroir ou cet ensemble de miroirs selon un mouvement de rotation continue à sens de rotation constant, appelé rotation principale. Il est alors aussi adapté pour modifier en outre une inclinaison du miroir ou d'au moins un miroir de l'ensemble de miroirs pendant la rotation principale, selon un basculement alternatif, avec des périodes pour la rotation principale et pour le basculement alternatif qui sont identiques.

Selon l'invention également, le dispositif de balayage comprend une piste qui est fixe par rapport à l'optique de formation d'image, et un élément suiveur qui est relié au miroir mobile ou à l'au moins un miroir à inclinaison variable de l'ensemble mobile de miroirs. L'élément suiveur est alors agencé pour rester appliqué sur la piste pendant la rotation principale, et la piste possède une forme adaptée pour imposer, à travers l'élément suiveur, l'inclinaison du miroir mobile ou de l'au moins un miroir à inclinaison variable de l'ensemble mobile de miroir tout au long de la rotation principale. Ainsi, la forme de la piste peut être déterminée pour produire la coregistration spatiale et/ou spectrale.

Le miroir mobile ou l'ensemble mobile de miroirs du système de balayage peut être situé devant une entrée optique de l'optique de formation d'image, de sorte que des rayonnements provenant de chaque portion de surface de la planète soient réfléchis par ce miroir mobile ou ensemble mobile de miroirs avant d'entrer dans l'optique de formation d'image.

En particulier, le système de balayage peut comprendre un ensemble mobile à au moins deux miroirs, qui est agencé pour décaler transversalement la ligne de visée du système d'imagerie par rapport à un axe optique de l'optique de formation d'image, et pour dévier aussi angulairement la ligne de visée par rapport à l'axe optique. De cette façon, la ligne de visée coupe obliquement l'axe optique en amont de l'optique de formation d'image, par rapport à un sens de propagation du rayonnement qui provient de la portion de surface de la planète et qui forme l'image saisie. Ainsi, l'entrée optique du système d'imagerie peut avoir des dimensions plus réduites, et l'ensemble de ce système est plus facile à intégrer dans le satellite. En outre, l'entrée optique réduite qui est ainsi possible pour le système d'imagerie permet de limiter une quantité de rayonnement parasite qui est susceptible de pénétrer dans ce système.

Avantageusement, le dispositif de balayage peut comprendre un ensemble mobile à au moins trois miroirs, chaque miroir ayant un plan d'incidence effectif lors du fonctionnement du système d'imagerie, l'ensemble mobile des miroirs étant conçu pour qu'une direction quelconque de polarisation rectiligne du rayonnement qui traverse le dispositif de balayage puis pénètre dans l'optique de formation d'image en étant parallèle au plan d'incidence de l'un des miroirs, soit perpendiculaire ou oblique par rapport au plan d'incidence d'au moins un autre des miroirs. Ainsi, des effets polarisants qui peuvent être provoqués par certains au moins des miroirs du dispositif de balayage peuvent être compensés entre des miroirs différents.

Un second aspect de l'invention propose un procédé, selon la revendication 9, de saisie d'images de portions d'une surface d'une planète, chaque portion de surface de la planète étant saisie en images selon deux valeurs distinctes d'angle d'incidence, ce procédé étant exécuté en utilisant un système d'imagerie qui est conforme au premier aspect de l'invention. Pour cela, le système d'imagerie est à bord du satellite en orbite autour de la planète, et l'une des valeurs d'angle d'incidence est produite dans l'un des deux intervalles utiles de variation continue de la ligne de visée, et l'autre valeur d'angle d'incidence est produite dans l'autre de ces deux intervalles utiles de variation continue de la ligne de visée.

La planète concernée par le procédé de l'invention peut être la Terre.

Le capteur d'images peut être sensible à un rayonnement d'émission thermique de la surface de la planète, et le procédé peut comprendre en outre :
- une étape de sélection d'au moins une paire d'intensités d'images qui sont relatives à une même portion identifiée de la surface de la planète et à une même fenêtre spectrale, ces intensités d'images correspondant une-à-une aux deux valeurs d'angle d'incidence pour la portion de la surface de la planète ; et
- à partir de cette ou ces paire(s) d'intensités d'images, calculer une valeur de température de la surface de la planète qui existe dans la portion identifiée, en tenant compte d'une absorption et/ou d'une émission du rayonnement par une portion d'atmosphère qui est présente au-dessus de la surface de la planète dans la portion identifiée.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[ Fig. 1], déjà commentée, illustre une utilisation d'un système d'imagerie conforme à l'invention ;
[ Fig. 2], déjà commentée, est une vue en perspective qui montre une trace sur la surface de la Terre du mouvement de balayage de la ligne de visée pour un système d'imagerie connu avant la présente invention ;
[ Fig. 3] montre des décalages entre des portions de surface terrestre qui sont imagées successivement par un instrument d'imagerie utilisé avant la présente invention ;
[ Fig. 4a] est un schéma de principe d'un système d'imagerie conforme à l'invention, pour lequel le dispositif de balayage comprend deux miroirs ;
[ Fig. 4b] est un diagramme qui montre la variation temporelle d'inclinaison de l'un des miroirs du dispositif de balayage du système d'imagerie de [Fig. 3a] ;
[ Fig. 5] montre un exemple d'agencement de capteurs d'images pour un système d'imagerie conforme à l'invention ;
[ Fig. 6a] correspond à [Fig. 2] pour un système d'imagerie conforme à l'invention ;
[ Fig. 6b] est une vue en plan qui montre le mouvement de la ligne de visée tel que produit par le dispositif de balayage ;
[ Fig. 7] montre une réalisation d'un dispositif de balayage compatible avec l'invention, qui produit une compensation partielle entre des effets polarisants de miroirs différents de ce dispositif ; et
[ Fig. 8] est un schéma de principe d'un dispositif de balayage à un seul miroir qui peut être utilisé dans un système d'imagerie conforme à l'invention.

### Description détaillée de l'invention

Pour raison de clarté, les dimensions des éléments qui sont représentés dans ces figures ne correspondent ni à des dimensions réelles, ni à des rapports de dimensions réels. En outre, certains de ces éléments ne sont représentés que symboliquement, et des références identiques qui sont indiquées dans des figures différentes désignent des éléments identiques ou qui ont des fonctions identiques.

Un système d'imagerie conforme à l'invention est destiné à être utilisé dans des conditions qui sont similaires à celles décrites en référence à [Fig. 1] pour un système de l'art antérieur. Notamment, les valeurs qui ont été citées pour les angles α₁ et α₂ peuvent être reprises, pour les directions D₁ et D₂ de la ligne de visée qui coupent la trace du satellite sur la surface de la Terre. Par rapport au fonctionnement qui a été décrit en référence à [Fig. 1] et [Fig. 2] pour le système d'imagerie de l'art antérieur, le fonctionnement du système d'imagerie de l'invention se distingue par la trajectoire du mouvement de la ligne de visée qui est produit par le dispositif de balayage.

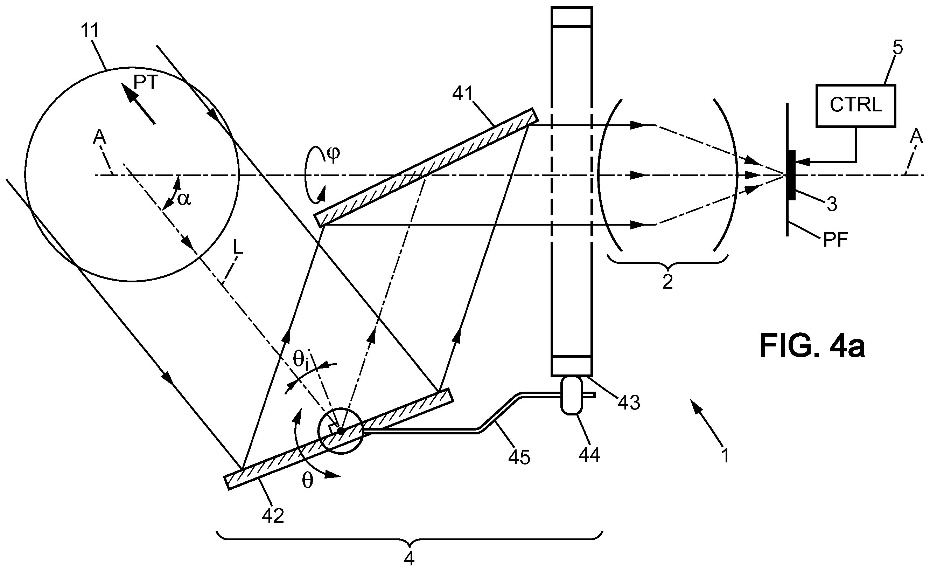

Pour cela, et conformément à [Fig. 4a], le système d'imagerie de l'invention qui est désigné globalement par la référence 1 comprend une optique de formation d'image 2, au moins un capteur d'images 3 et un dispositif de balayage 4. L'optique de formation d'image 2 peut être un télescope, et le capteur d'images 3 est disposé dans le plan focal PF de cette optique de formation d'image 2. Du rayonnement qui provient de la portion PT de surface terrestre selon la ligne de visée L du système d'imagerie 1 est d'abord transmis par le dispositif de balayage 4 à l'optique de formation d'image 2, puis cette dernière focalise ce rayonnement sur le capteur d'images 3. A-A désigne l'axe optique de l'optique de formation d'image 2. Le dispositif de balayage comprend les composants suivants selon un premier mode de réalisation qui est possible pour l'invention : deux miroirs 41 et 42, respectivement, une piste 43 qui est fixe par rapport à l'optique de formation d'image 2 et qui entoure continûment l'axe optique A-A, et un élément suiveur 44. Pendant tout le fonctionnement du système d'imagerie 1, les deux miroirs 41 et 42 ont des inclinaisons telles que la ligne de visée L est déviée deux fois pour combiner un décalage transversal et une déviation angulaire de celle-ci par rapport à l'axe optique A-A. Ainsi, la ligne de visée L coupe l'axe optique A-A en amont du dispositif de balayage 4 par rapport au sens de propagation du rayonnement. Autour de cette intersection, une ouverture optique d'entrée du système d'imagerie 1 peut avoir une section restreinte, si bien que la quantité de rayonnement parasite qui est susceptible de pénétrer dans le système d'imagerie simultanément au rayonnement qui provient de la portion PT de surface terrestre, est réduite. α désigne l'angle entre la ligne de visée L et l'axe optique A-A en amont du dispositif de balayage 4.

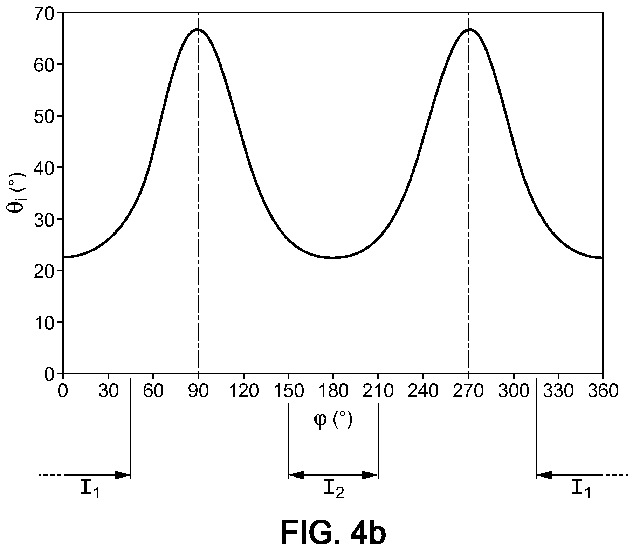

Le dispositif de balayage 4 comporte une monture (non représentée) qui supporte les miroirs 41 et 42, et qui est mise en rotation autour de l'axe optique A-A par un système d'entraînement et de roulement approprié (non représenté). Autrement dit, l'axe de la rotation de la monture est superposé à l'axe optique A-A. Ainsi l'angle φ est variable dans le temps, par exemple conformément à une vitesse de rotation constante de la monture autour de l'axe optique A-A. Ces variations de l'angle φ, produites par le dispositif de balayage 4 et combinées avec une direction pour l'axe optique A-A qui est inclinée par rapport à la surface ST de la Terre, permettent de produire les deux valeurs d'inclinaison α₁ et α₂ de la ligne de visée L par rapport à la direction verticale V dans la portion PT de surface terrestre, imagée à deux instants différents du défilement du satellite 10 sur son orbite OS. Le miroir 41 peut avoir une inclinaison par rapport à l'axe optique A-A qui est constante tout au long de la rotation, alors que le miroir 42 a une inclinaison variable avec la même période de variation temporelle que l'angle de rotation φ. Par exemple, la piste 43 peut avoir un écartement par rapport à l'axe optique A-A qui est variable entre des endroits différents de cette piste autour de l'axe optique. Alternativement, la piste 43 peut avoir une hauteur variable parallèlement à l'axe optique A-A. L'élément suiveur 44, par exemple un galet glissant qui est maintenu appliqué sur la piste 43 par un ressort (non représenté), peut être relié au miroir 42 par une tige rigide 45 de longueur fixe. Ainsi, lors de la rotation de la monture autour de l'axe optique A-A, l'élément suiveur 44 s'écarte et se rapproche de l'axe optique A-A, ou se déplace parallèlement à cet axe optique selon un mouvement de va-et-vient, et provoque une variation de l'inclinaison du miroir 42 avec la même périodicité temporelle que celle de la rotation de la monture. La forme de la piste 43 est conçue pour obtenir la variation temporelle désirée pour l'inclinaison θ du miroir 42, et par suite pour obtenir le parcours désiré pour le mouvement de la ligne de visée L. Ce mouvement, tel que produit par le dispositif de balayage 4, est donc en boucle fermée et à sens de parcours constant. Le diagramme de [Fig. 4b] montre un exemple de variation qui est ainsi obtenue pour l'angle d'incidence sur le miroir 42 du rayonnement provenant de la surface terrestre ST. Dans ce diagramme, cet angle d'incidence qui est varié à travers l'inclinaison θ du miroir 42, est noté θᵢ et est porté en ordonnée, et l'axe d'abscisse repère les valeurs de l'angle φ de la rotation principale du dispositif de balayage 4 autour de l'axe optique A-A. Les deux angles φ et θᵢ sont exprimés en degrés (°). Les positions de la ligne de visée L qui sont ainsi produites pour les valeurs 0° et 180° de l'angle φ et dans les intervalles I₁ et I₂ autour de ces valeurs sont dédiées aux saisies d'images selon les directions D₁ et D₂ de la ligne de visée L, respectivement, ainsi qu'à des images qui sont saisies le long de deux traces de balayage transversales autour de ces deux directions D₁ et D₂. Par rapport à [Fig. 3], la variation qui est produite ainsi pour l'angle d'inclinaison θ du miroir 42, en fonction de l'angle de rotation principale φ, supprime le décalage longitudinal de la portion de surface terrestre PT₂ par rapport à celle PT₁ pour les valeurs de φ qui sont comprises entre -45° et +45° environ de part et d'autre de la direction D₁, correspondant à l'intervalle I₁, et celles qui sont comprises entre 150° et 210° environ de part et d'autre de la direction D₂, correspondant à l'intervalle I₂. Le décalage transversal des deux portions de surface terrestre PT₁ et PT₂ l'une par rapport à l'autre, perpendiculairement aux grands côtés de celles-ci, peut être ajusté tout le long de ces deux traces de balayage transversales par une variation temporelle appropriée de la vitesse de rotation principale, selon l'angle φ, et/ou une variation appropriée de la durée intermédiaire entre deux images qui sont saisies successivement. Il peut être ajusté avantageusement pour que les deux portions de surface terrestre PT₁ et PT₂ soient adjacentes, afin que les deux traces de balayage transversales soient saisies en images dans leur intégralité et avec des recouvrements d'images qui sont minimaux. Les saisies d'images de la surface de la Terre sont suspendues en dehors des intervalles I₁ et I₂. Facultativement, l'une des deux positions de la ligne de visée L qui sont produites pour les valeurs 90° ou 270° de l'angle φ peut être dédiée à une calibration interne, et l'autre, aussi facultativement, peut être dédiée à une calibration sur fond spatial. De telles calibrations seront décrites plus loin.

Le contrôleur 5 commande les séquences de saisie d'images à réaliser par chaque capteur qui est disposé dans le plan focal PF. En particulier, il commande de telles séquences d'une façon qui est synchronisée avec le balayage produit par le dispositif 4.

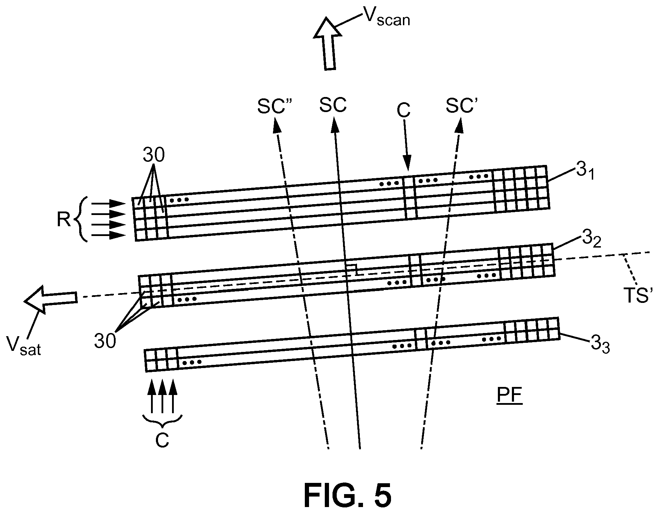

[Fig. 5] montre un exemple de disposition de capteurs d'images dans le plan focal PF, tel que rendu possible par la présente invention. Le nombre des capteurs d'images est trois à titre d'exemple, et ils sont désignés par les références 3₁, 3₂ et 3₃ respectivement. SC désigne la direction de déplacement, dans le plan focal PF, de l'image de la portion de surface terrestre PT pendant le fonctionnement du dispositif de balayage 4. L'obtention d'une telle direction de déplacement d'image qui soit uniforme à l'intérieur du plan focal PF sera décrite plus loin. Chacun des capteurs d'images 3₁-3₃ possède au moins une colonne C de photodétecteurs individuels, par exemple 120 colonnes parallèles de photodétecteurs individuels qui sont désignés chacun par la référence 30. Lorsqu'il possède plusieurs colonnes C parallèles et juxtaposées, chacun des capteurs d'images 3₁-3₃ possède une configuration matricielle, les photodétecteurs 30 de ce capteur d'images formant alors des lignes R. Chaque capteur d'images 3₁-3₃ peut avoir un nombre quelconque de lignes R, par exemple deux à quatre lignes dans l'exemple qui est représenté. Lors d'une utilisation du système d'imagerie, ce système est orienté pour que les trois capteurs d'images 3₁-3₃ aient leurs colonnes C toutes parallèles à la direction de déplacement d'image SC à l'intérieur du plan focal PF. De cette façon, une coregistration spatiale est obtenue, c'est-à-dire que chaque portion PT de surface terrestre qui est imagée à un instant sur un seul des photodétecteurs 30 d'un des capteurs d'images 3₁-3₃ est ensuite imagée sur le photodétecteur 30 suivant dans la même colonne de ce capteur d'images. Ainsi, chaque capteur d'images utilisé peut être du type TDI. Le fonctionnement usuel de tels capteurs TDI est alors retrouvé, où la direction des colonnes C est la direction d'accumulation à décalage temporel, et est parallèle à la direction de déplacement d'image SC dans le plan focal PF.

Les dimensions à la surface ST de la Terre de chaque portion élémentaire de celle-ci qui est imagée sur un seul photodétecteur 30 dépendent du grossissement de l'optique de formation d'image 2. Par exemple, une telle portion élémentaire de surface terrestre peut être un carré de 500 m (mètre) par 500 m. Pour un capteur d'images à 120 colonnes C, chaque séquence de saisie d'image qui est effectuée dans l'un ou l'autre des intervalles utiles I₁, I₂ de variation continue de la ligne de visée L correspond à une bande de surface terrestre de plusieurs dizaines de kilomètres de large, mesurée parallèlement à la trace TS. La longueur de cette bande, mesurée perpendiculairement à la trace TS et correspondant à la largeur de la fauchée qui résulte du défilement du satellite 10, dépend de la longueur des intervalles utiles I₁, I₂ pour laquelle un écart d'inclinaison entre les directions de ligne de visée respectivement dans chacun de ces intervalles utiles, pour une même portion élémentaire de surface terrestre qui est décalée transversalement par rapport à la trace TS, reste supérieur à une valeur minimale prescrite. Cette largeur de fauchée peut être supérieure à 500 km (kilomètre). En outre, lorsque chaque colonne C d'un des capteurs d'images contient N photodétecteurs 30, l'addition des signaux d'accumulation que permet la coregistration spatiale augmente les performances radiométriques de ce capteur d'images selon un facteur N^{1/2}.

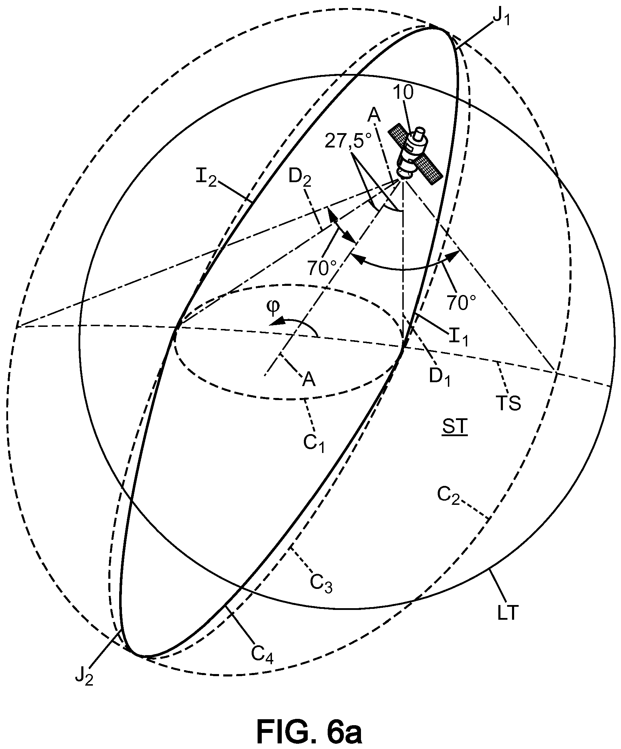

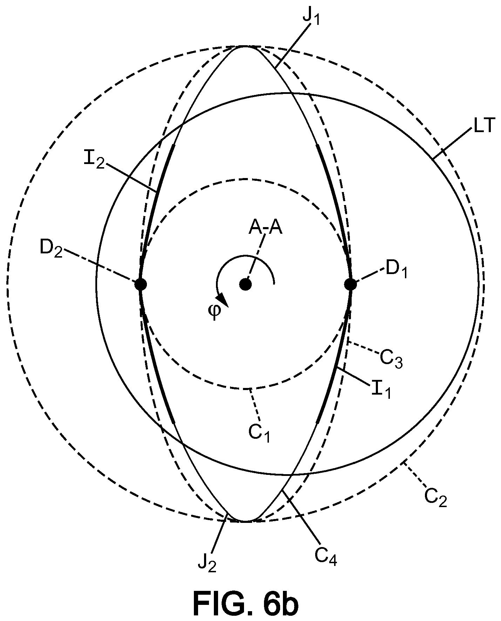

La référence TS' dans [Fig. 5] désigne l'image de la trace au sol TS du défilement du satellite 10. Lors de l'utilisation du système d'imagerie, le satellite 10 est orienté pour que la direction de déplacement d'image SC soit perpendiculaire à la trace TS'. Dans [Fig. 5], Vₛₐₜ et V_{scan} désignent respectivement la vitesse de déplacement du satellite 10 telle qu'apparaissant dans le plan focal PF et la vitesse de déplacement d'image, qui sont perpendiculaires l'une à l'autre pour la direction D₁ de la ligne de visée L.En outre, la vitesse de balayage du dispositif 4 est avantageusement ajustée pour que les portions de la surface terrestre ST qui recouvrent en image les lignes R dans toute la longueur de celles-ci, pour deux répétitions successives du mouvement périodique du dispositif de balayage 4, soient adjacentes le long de la trace TS' ou présentent de faibles recouvrements d'extrémités de ligne. Ainsi, une fauchée continue est saisie en image par le système d'imagerie 1, progressivement au cours du défilement du satellite 10 sur son orbite OS. Pour cela, le contrôleur 5 active continuellement les capteurs d'images 3₁-3₃ pour réaliser des séquences de détection de rayonnement de façon enchaînée chacune après la précédente tant que la ligne de visée L est dans l'un ou l'autre des intervalles utiles I₁ et I₂. La largeur de cette fauchée est déterminée par les longueurs des intervalles utiles I₁ et I₂ de variation continue de la ligne de visée L (voir [Fig. 6a] et [Fig. 6b]). A cause de la dégradation de résolution spatiale que provoque la courbure de la surface terrestre ST, chacun des intervalles utiles I₁, I₂ peut être limité à des valeurs de déviation transversale de la ligne de visée L qui sont inférieures à 60°, approximativement, pour une altitude d'environ 800 km du satellite 10.

Selon un perfectionnement de l'invention pour saisir des images multispectrales, les capteurs d'images 3₁-3₃ peuvent être combinés chacun avec un filtre spectral différent. De tels filtres spectraux peuvent être disposés directement sur les capteurs d'images, au-dessus de toute la surface photosensible de chacun d'eux. Une telle configuration où les filtres spectraux sont disposés dans le plan focal PF est particulièrement avantageuse pour sa simplicité de mise en œuvre, par rapport à des configurations alternatives à duplication de plan focal. Les capteurs d'images 3₁-3₃ sont décalés selon la direction de déplacement d'image SC, si bien que l'image d'une même portion PT de la surface terrestre ST se déplace successivement des colonnes d'un des capteurs d'images aux colonnes du capteur d'images suivant dans la direction SC. L'émission de rayonnement de cette portion PT de surface terrestre peut ainsi être saisie en image et mesurée dans les fenêtres spectrales des trois filtres, ce qui est couramment désigné par coregistration spectrale. A titre d'exemple, les bandes spectrales des filtres qui sont associés un-à-un aux trois capteurs d'images 3₁, 3₂ et 3₃ peuvent être respectivement : de 3 µm à 4 µm, 10 µm à 11 µm et 11 µm à 12 µm, pour une mission de mesure de la température de surface de la Terre.

Lorsque les capteurs d'images 3₁-3₃ et les filtres spectraux qui leurs sont associés sont fonctionnels dans le domaine infrarouge thermique, les intensités spectrales de rayonnement qui sont mesurées ainsi pour deux inclinaisons différentes de la ligne de visée L par rapport à la portion PT de surface terrestre, permettent de calculer la température de la surface de la Terre dans cette portion. Ce calcul est connu de l'art antérieur sans être l'objet de la présente invention, si bien qu'il n'est pas nécessaire de le détailler ici. On pourra se reporter notamment au document intitulé «Sea Surface Temperature (SLSTR) Algorithm Theoretical Basis Document», University of Edimburg, October 2012, Numéro de document : SLSTR-ATBD-L2SST-v2.5, disponible en ligne à l'adresse https://sentinel.esa.int/documents/247904/0/SLSTR Level-2 SST ATBD.pdf/13a136c8-ca00-414e-bdd8-fb976cf3a7b3. Ce document décrit d'utiliser des algorithmes qui combinent des valeurs de température de brillance déduites des images saisies, en les pondérant par des coefficients basés sur un modèle physique. Une régression est ensuite utilisée, par rapport à une équation dont la forme tient compte des directions de la ligne de visée L, afin de réduire une variance de la température de surface de la Terre.

Dans [Fig. 6a] et [Fig. 6b], C₁ désigne la trace à la surface ST de la Terre du mouvement de la ligne de visée L, tel que produit par le dispositif de balayage 4 lorsque le miroir 42 est incliné de sorte que la ligne de visée L fasse un angle (noté α dans [Fig. 4a]) avec l'axe optique A-A qui est constant et égal à environ 27,5° (degré). La trace C₁ correspond donc à l'intersection d'un cône de demi-angle d'ouverture au sommet sensiblement égal à 27,5° avec la surface ST de la Terre. L'axe optique A-A, c'est-à-dire l'axe du cône, est lui-même orienté pour que les directions D₁ et D₂ soient inclinées d'environ 0° et 55° respectivement, à titre d'exemple, par rapport à la direction verticale V à la surface de la Terre dans les portions imagées. La forme exacte de la trace C₁ dans [Fig. 6a] provient d'une combinaison de l'effet de perspective de la figure, de l'inclinaison de l'axe optique A-A pour que la direction D₁ soit proche de la direction verticale à l'endroit correspondant de la surface ST de la Terre, et de la courbure de cette surface ST de la Terre. Le plan de [Fig. 6b] est un plan de section qui est perpendiculaire à l'axe optique A-A. Pour cette raison, la trace C₁ est un cercle dans [Fig. 6b]. Pour cette trace C₁ et lorsque l'angle φ varie à partir de la direction D₁, correspondant à φ=0°, l'image de la portion PT de surface terrestre qui est imagée dans le plan focal PF se déplace initialement parallèlement à direction SC puis, pour cette même portion PT lorsque l'angle φ devient de plus en plus grand, selon une direction de déplacement SC' qui est de plus en plus écartée angulairement par rapport à la direction SC (voir [Fig. 5]). Lorsque l'angle φ est égal à 90°, la direction SC' est devenue perpendiculaire à la direction SC. A cause de la variation de la direction de déplacement SC' lorsque l'angle φ varie, une coregistration spatiale est impossible lors que la ligne de visée L suit la trace C₁. A noter que l'image de la portion PT de surface terrestre reste constamment parallèle à elle-même lors de ce déplacement entre φ=0° et φ=90°.

De façon similaire, C₂ désigne la trace à la surface ST de la Terre du mouvement de la ligne de visée L lorsque le miroir 42 est incliné de sorte que la ligne de visée L fasse un angle (α dans [Fig. 4a]) avec l'axe optique A-A qui est constant et environ égal à 70°. On considère maintenant une variation progressive de l'inclinaison θ du miroir 42 au cours d'une révolution du dispositif de balayage 4 autour de l'axe optique A-A (angle φ de 0° à 360°) telle que le cône qui est décrit par la ligne de visée L ait une section elliptique orthogonalement à l'axe optique A-A, et telle que la ligne de visée L soit sur la trace C₁ pour φ=0° et 180°, et sur la trace C₂ pour φ=90° et 270°. La trace de la ligne de visée L sur la surface de la Terre qui est obtenue ainsi est désignée par C₃. Alors, pour la trace C₃ et lorsque l'angle φ varie à partir de la direction D₁, l'image de la portion PT de surface terrestre qui est imagée dans le plan focal PF se déplace encore initialement parallèlement à direction SC puis, toujours pour cette même portion PT lorsque l'angle φ devient de plus en plus grand, selon une direction de déplacement SC" qui est inclinée par rapport à SC dans un sens opposé à celui de la direction SC' (voir [Fig. 5]). Il existe donc une trace de la ligne de visée L sur la surface ST de la Terre, qui peut être intermédiaire entre les traces C₁ et C₃, et/ou proche de l'une et/ou l'autre de ces deux traces C₁ et C₃, et pour laquelle la direction de déplacement de l'image de la portion PT de surface terrestre reste constamment identique à SC. Cette trace est désignée par la référence C₄ dans [Fig. 6a] et [Fig. 6b], et représentée en trait continu. La variation correspondante de l'angle d'incidence θᵢ du rayonnement sur le miroir 42, c'est-à-dire θᵢ(φ) est celle qui est représentée dans [Fig. 4b]. Cette variation, qui correspond à l'une des réalisations de l'invention, est obtenue en conférant une forme adéquate à la piste 43. La forme à procurer à la piste 43 pour que la direction de déplacement de l'image de la portion PT de surface terrestre reste aussi constamment identique à SC autour de la direction D₂, c'est-à-dire lorsque l'angle φ est proche de 180°, est obtenue de façon similaire. Cette forme est différente de celle obtenue lorsque l'angle φ est proche de 0°, du fait de l'inclinaison de l'axe optique A-A par rapport à la surface moyenne de la Terre. Le mouvement de la ligne de visée L qui est ainsi obtenu, conformément à la trace C₄, fournit deux intervalles de variation de la ligne de visée : l'un autour de la direction D₁ et noté I₁, et l'autre autour de la direction D₂ et noté I₂. Dans [Fig. 6a] et [Fig. 6b], la trace C₄ est représentée en trait continu, et dans celle-ci, les segments en trait continu épais sont les intervalles utiles I₁ et I₂, par opposition à des intervalles J₁ et J₂ non-utiles pour des saisies d'images, qui sont en trait continu fin et intermédiaires entre les intervalles I₁ et I₂.

Pour cette solution de l'invention décrite en référence à [Fig. 6a] et [Fig. 6b], la ligne de visée L sort du limbe terrestre, noté LT, entre les intervalles I₁ et I₂ lorsque l'angle α entre la ligne de visée L et l'axe optique A-A est proche de 70°. Le limbe terrestre LT apparaît dans ces figures comme un cercle qui est approximativement centré sur la direction D₁. Pour une altitude du satellite 10 d'environ 800 km, le limbe terrestre LT correspond à un cône de section circulaire et de demi-angle d'ouverture au sommet d'environ 65°. Ainsi, les deux intervalles I₁ et I₂ qui sont utiles pour saisir en images la fauchée dans la surface ST de la Terre, chacun selon un intervalle différent de valeurs d'inclinaison par rapport à la direction verticale locale, sont séparés par des intervalles inutilisables pour la fonction d'imagerie à proximité des valeurs 90° et 270° pour l'angle φ. Ces intervalles inutilisables pour la fonction d'imagerie sont ceux qui ont été désignés ci-dessus par J₁ et J₂. L'un de ces deux intervalles peut alors être utilisé pour réaliser une calibration des valeurs d'intensité de rayonnement qui sont mesurées par le système d'imagerie 1, sur le fond spatial à l'extérieur du limbe terrestre LT. Par exemple, si une telle calibration sur le fond spatial est réalisée dans l'intervalle J₁, une séquence de détection de rayonnement par les capteurs d'images 3₁-3₃, aux fins de calibration, peut être déclenchée par le contrôleur 5 lorsque φ égale 90°. Une autre calibration peut aussi être réalisée en utilisant une source de rayonnement qui est embarquée à bord du satellite 10 avec l'instrument d'imagerie 1. Une telle autre calibration est couramment dite «interne», par opposition à la calibration sur le fond spatial. Par exemple, une telle calibration interne peut être réalisée dans l'intervalle J₂, sur déclenchement par le contrôleur 5 d'une séquence de détection de rayonnement à exécuter par les capteurs d'images 3₁-3₃ lorsque φ est égal à 270°, par exemple. Pour cela, la source de rayonnement de calibration peut être disposée selon la direction de la ligne de visée L qui correspond à l'angle φ égal à 270°et à l'angle α simultanément égal à 70°. La source de rayonnement de calibration ainsi disposée est désignée par la référence 11 dans [Fig. 4a].

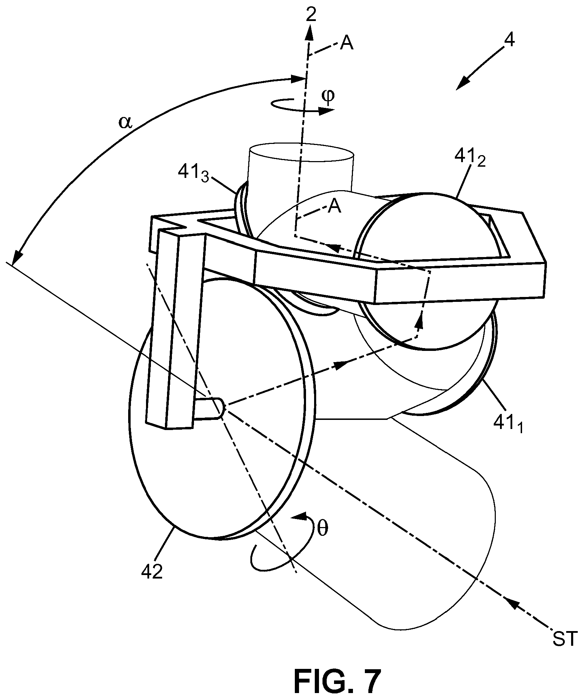

Le dispositif de balayage 4 à deux miroirs représenté dans [Fig. 4a] possède un effet polarisant qui peut être important, car les plans d'incidence du rayonnement sur l'un et l'autre des miroirs 41 et 42 sont confondus. Pour éviter un tel effet polarisant, une autre structure peut être adoptée pour le dispositif de balayage 4, à au moins trois miroirs. Par exemple, dans la structure à quatre miroirs qui est représentée dans [Fig. 7], le miroir 42 est encore le miroir dont l'inclinaison θ varie au cours de la révolution du dispositif de balayage 4 selon l'angle φ, et les miroirs 41₁, 41₂ et 41₃ ont des orientations fixes à l'intérieur de ce dispositif rotatif. Le rayonnement qui provient de la surface terrestre ST est d'abord réfléchi par le miroir 42, puis successivement dans l'ordre par le miroir 41₁, le miroir 41₂ puis le miroir 41₃, et pénètre ensuite dans l'optique de formation d'image 2. Dans cette structure à quatre miroirs, toutes les directions de polarisation linéaire du rayonnement ont des orientations qui varient par rapport au plan d'incidence d'un miroir à l'autre, si bien que des effets polarisants individuels des miroirs se compensent en partie mutuellement. D'autres structures à effet polarisant qui est réduit sont aussi possibles pour le dispositif de balayage 4, et sont connues ou à la portée de l'Homme du métier.

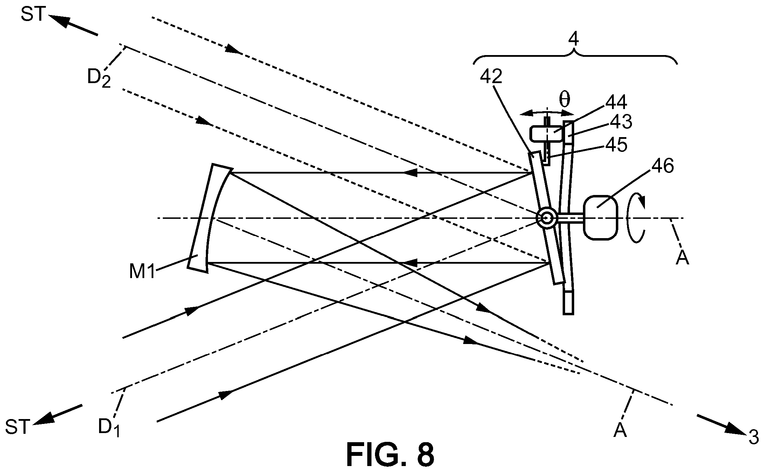

[Fig. 8] montre une réalisation du dispositif de balayage 4 à un seul miroir. Le dispositif de balayage 4 comprend encore le miroir à inclinaison variable 42, dont l'inclinaison est repérée de même par l'angle variable θ. Ce miroir 42 est entraîné en rotation par le moteur 46, en étant encore relié à un élément suiveur 44 par une tige rigide 45. Lors de la rotation du miroir 42, l'élément suiveur 44 est contraint à rester appliqué sur la piste 43, si bien que la forme de cette piste 43 ajuste l'inclinaison du miroir 42. De même que précédemment, la vitesse de rotation du miroir 42 peut être variable et ajustée pour que des images qui sont saisies successivement le long des traces de balayage transversales présentent des recouvrements minimaux. A titre d'illustration, l'optique de formation d'image du mode de réalisation de [Fig. 8] est un télescope, dont seul le miroir primaire est représenté, en étant désigné par la référence M1. Le rayonnement qui provient de la surface terrestre ST est ainsi réfléchi d'abord par le miroir 42, puis par le miroir primaire M1, puis par les autres miroirs du télescope en direction du capteur d'images 3. Pour un tel mode de réalisation où le dispositif de balayage 4 ne comporte qu'un seul miroir, les directions D₁ et D₂ de la ligne de visée L telles que produites par le dispositif de balayage 4 peuvent passer sur deux côtés opposés du miroir primaire M1. Un tel mode de réalisation peut procurer des réductions d'encombrement et de poids par rapport à des systèmes où le dispositif de balayage 4 comporte plusieurs miroirs.

Il est entendu que l'invention peut être reproduite en modifiant des aspects secondaires des modes de réalisation qui ont été décrits en détail ci-dessus, tout en conservant certains au moins des avantages cités. Notamment, toutes les valeurs numériques qui ont été citées ne l'ont été qu'à titre d'illustration, et peuvent être changées en fonction de la mission spatiale considérée.

## Revendications

1. Système d'imagerie (1) à balayage destiné à être embarqué à bord d'un satellite (10) en orbite autour d'une planète, pour saisir des images de portions de surface de la planète, chaque portion de surface de la planète étant saisie en images selon deux valeurs différentes d'inclinaison d'une ligne de visée (L) du système d'imagerie par rapport à ladite portion de surface de la planète, le système d'imagerie comprenant :
- une optique de formation d'image (2), qui est adaptée pour former une image dans un plan focal (PF) ;
- au moins un capteur d'images (3), qui est disposé dans le plan focal (PF) ;
- un dispositif de balayage (4), qui est adapté pour varier la ligne de visée (L) du système d'imagerie (1) selon un mouvement en boucle fermée et à sens de parcours constant, répété périodiquement, avec au moins deux intervalles utiles (I₁, I₂) de variation continue de la ligne de visée dans chaque répétition du mouvement de la ligne de visée, qui sont disjoints, de sorte que des images soient formées sur le capteur d'images (3) qui correspondent alternativement à l'un puis à l'autre des deux intervalles utiles de variation continue de la ligne de visée ; et
- un contrôleur (5), qui est configuré pour contrôler le capteur d'images (3) de façon à réaliser une séquence respective de saisie d'image pour chacun des deux intervalles utiles (I₁, I₂) de variation continue de la ligne de visée (L), et pour chaque répétition du mouvement de la ligne de visée pendant un défilement du satellite (10) au-dessus de la surface de la planète, de sorte qu'une même portion de surface de la planète soit saisie en image deux fois, une première fois lorsque la ligne de visée est dans l'un des deux intervalles utiles, correspondant à une des valeurs d'inclinaison de la ligne de visée par rapport à ladite portion de surface de la planète, et une seconde fois lorsque ladite ligne de visée est dans l'autre des deux intervalles utiles, correspondant à l'autre des valeurs d'inclinaison de la ligne de visée par rapport à ladite portion de surface de la planète,
le capteur d'images (3) comprenant au moins une colonne (C) rectiligne de photodétecteurs (30) adjacents qui est contenue dans le plan focal (PF),
et le mouvement de la ligne de visée (L) étant adapté de sorte que, lors d'une utilisation du système d'imagerie (1) à bord du satellite (10), l'image de la portion de la surface de la planète qui est formée dans le plan focal (PF) pour chaque intervalle utile (I₁, I₂) de variation continue de la ligne de visée (L) se déplace parallèlement à la colonne (C) des photodétecteurs (30),
le système d'imagerie (1) étant **caractérisé en ce que** le dispositif de balayage (4) comprend un miroir mobile (42) ou un ensemble mobile de miroirs, et est adapté pour faire tourner ledit miroir ou ensemble de miroirs selon un mouvement de rotation continue à sens de rotation constant, appelé rotation principale, et pour modifier en outre une inclinaison du miroir ou d'au moins un miroir de l'ensemble de miroirs pendant la rotation principale, selon un basculement alternatif, avec des périodes pour la rotation principale et pour le basculement alternatif qui sont identiques,
et **en ce que** le dispositif de balayage (4) comprend une piste (44) qui est fixe par rapport à l'optique de formation d'image (2), et un élément suiveur (43) qui est relié au miroir mobile (42) ou à l'au moins un miroir à inclinaison variable de l'ensemble mobile de miroirs, l'élément suiveur étant agencé pour rester appliqué sur la piste pendant la rotation principale, et la piste possédant une forme adaptée pour imposer, à travers l'élément suiveur, l'inclinaison dudit miroir mobile ou dudit au moins un miroir à inclinaison variable de l'ensemble mobile de miroirs tout au long de ladite rotation principale.

2. Système d'imagerie (1) selon la revendication 1, dans lequel le capteur d'images (3) comprend plusieurs colonnes (C) rectilignes et parallèles de photodétecteurs (30) adjacents qui sont contenues dans le plan focal (PF), avec une direction de lignes (R) des photodétecteurs qui est perpendiculaire aux colonnes.

3. Système d'imagerie (1) selon la revendication 2, dans lequel le capteur d'images (3) est de type à intégration par décalage temporel, avec une direction d'accumulation à décalage temporel qui est parallèle aux colonnes (C).

4. Système d'imagerie (1) selon l'une quelconque des revendications précédentes, comprenant plusieurs capteurs d'images (3₁-3₃) qui sont disposés dans le plan focal (PF), chaque capteur d'images comprenant au moins une colonne (C) rectiligne de photodétecteurs (30) adjacents qui est contenue dans ledit plan focal,
l'image de la portion de la surface de la planète qui est formée dans le plan focal (PF) pour chaque intervalle utile (I₁, I₂) de variation continue de la ligne de visée (L) se déplaçant parallèlement à la colonne (C) de photodétecteurs (30) de chacun des capteurs d'images, et
le système d'imagerie (1) comprenant en outre des filtres spectraux qui sont associés respectivement aux capteurs d'images (3₁-3₃), et qui déterminent des fenêtres spectrales différentes, de sorte que des images d'une première portion de la surface de la planète sont saisies pour toutes les fenêtres spectrales lorsque la ligne de visée (L) est dans l'un des deux intervalles utiles (I₁, I₂) de variation continue de ladite ligne de visée, et des images d'une seconde portion de la surface de la planète sont saisies aussi pour toutes les fenêtres spectrales lorsque la ligne de visée est dans l'autre des deux intervalles utiles de variation continue de la ligne de visée, à chaque répétition du mouvement de de la ligne de visée.

5. Système d'imagerie (1) selon l'une quelconque des revendications précédentes, dans lequel le dispositif de balayage (4) est adapté pour diriger la ligne de visée (L) à au moins une position au cours du mouvement en boucle fermée et à sens de parcours constant, entre les deux intervalles utiles (I₁, I₂) de variation continue de ladite ligne de visée, vers l'espace en dehors d'un limbe de la planète lors de l'utilisation du système d'imagerie à bord du satellite (10), et le contrôleur (5) est configuré pour contrôler le capteur d'images (3) de façon à réaliser une séquence supplémentaire de saisie d'image pour ladite position de la ligne de visée.

6. Système d'imagerie (1) selon l'une quelconque des revendications précédentes, dans lequel le miroir mobile (42) ou l'ensemble mobile de miroirs du système de balayage (4) est situé devant une entrée optique de l'optique de formation d'image (2), de sorte que des rayonnements provenant de chaque portion de surface de la planète soient réfléchis par ledit miroir mobile ou ensemble mobile de miroirs avant d'entrer dans ladite optique de formation d'image.

7. Système d'imagerie (1) selon la revendication 6, dans lequel le système de balayage (4) comprend un ensemble mobile à au moins deux miroirs, qui est agencé pour décaler transversalement la ligne de visée (L) du système d'imagerie par rapport à un axe optique (A-A) de l'optique de formation d'image (2), et pour dévier aussi angulairement la ligne de visée par rapport à l'axe optique, de sorte que ladite ligne de visée coupe obliquement ledit axe optique en amont de l'optique de formation d'image, par rapport à un sens de propagation d'un rayonnement qui provient de la portion de surface de la planète et qui forme l'image saisie.

8. Système d'imagerie (1) selon l'une quelconque des revendications précédentes, dans lequel le dispositif de balayage (4) comprend un ensemble mobile à au moins trois miroirs, chaque miroir ayant un plan d'incidence effectif lors d'un fonctionnement du système d'imagerie, l'ensemble mobile des miroirs étant conçu pour qu'une direction quelconque de polarisation rectiligne d'un rayonnement qui traverse le dispositif de balayage puis pénètre dans l'optique de formation d'image (2) en étant parallèle au plan d'incidence de l'un desdits au moins trois miroirs, soit perpendiculaire ou oblique par rapport au plan d'incidence d'au moins un autre desdits au moins trois miroirs.

9. Procédé de saisie d'images de portions d'une surface d'une planète, suivant lequel chaque portion de surface de la planète est saisie en images selon deux valeurs distinctes d'angle d'incidence, le procédé étant exécuté en utilisant un système d'imagerie (1) qui est conforme à l'une quelconque des revendications précédentes, ledit système d'imagerie étant à bord d'un satellite (10) en orbite autour de la planète, et l'une des valeurs d'angle d'incidence étant produite dans l'un des deux intervalles utiles (I₁, I₂) de variation continue de la ligne de visée (L), et l'autre valeur d'angle d'incidence étant produite dans l'autre desdits deux intervalles utiles de variation continue de la ligne de visée.

## Patentansprüche

1. Abtastendes Abbildungssystem (1), das vorgesehen ist, an Bord eines Satelliten (10) in einer Umlaufbahn um einen Planeten mitgeführt zu werden, um Bilder von Oberflächenabschnitten des Planeten zu erfassen, wobei jeder Oberflächenabschnitt des Planeten in Bildern, die zwei unterschiedlichen Neigungswerten einer Sichtline (L) des Abbildungssystems bezüglich des Oberflächenabschnitts des Planeten entsprechen, erfasst wird, wobei das Abbildungssystem aufweist:
- eine Bilderzeugungsoptik (2), die angepasst ist, um ein Bild in einer Fokalebene (PF) zu erzeugen;
- mindestens einen Bildsensor (3), der in der Fokalebene (PF) angeordnet ist;
- eine Abtastvorrichtung (4), die angepasst ist, um die Sichtlinie (L) des Abbildungssystems (1) gemäß einer sich periodisch wiederholenden Bewegung, die eine geschlossene Schleife in gleichbleibender Laufrichtung durchläuft, zu variieren, wobei in jeder Wiederholung der Bewegung der Sichtlinie mindestens zwei voneinander getrennte Nutzintervalle (I₁, I₂) kontinuierlicher Variation der Sichtlinie vorhanden sind, so dass an dem Bildsensor (3) Bilder erzeugt werden, die abwechselnd dem einen, dann dem anderen der zwei Nutzintervalle kontinuierlicher Variation der Sichtlinie entsprechen; und
- eine Steuerung (5), die konfiguriert ist, um den Bildsensor (3) auf eine Weise zu steuern, dass für jedes der zwei Nutzintervalle (I₁, I₂) kontinuierlicher Variation der Sichtlinie (L) und für jede Wiederholung der Bewegung der Sichtlinie während eines Flugs des Satelliten (10) über die Oberfläche des Planeten eine jeweilige Bilderfassungssequenz realisiert wird, derart, dass ein gleicher Oberflächenabschnitt des Planeten zwei Mal als Bild erfasst wird, ein erstes Mal, wenn die Sichtlinie in dem einen der zwei Nutzintervalle ist, das dem einen der Neigungswerte der Sichtlinie bezüglich dieses Oberflächenabschnitts des Planeten entspricht, und ein zweites Mal, wenn die Sichtlinie in dem anderen der zwei Nutzintervalle ist, das dem anderen der Neigungswerte der Sichtlinie bezüglich dieses Oberflächenabschnitts des Planeten entspricht,
wobei der Bildsensor (3) mindestens eine geradlinige Spaltenreihe (C) von nebeneinander angeordneten Fotodetektoren (30) aufweist, die in der Fokalebene (PF) enthalten ist,
und die Bewegung der Sichtlinie (L) derart angepasst ist, dass bei einer Verwendung des Abbildungssystems (1) an Bord des Satelliten (10) das Bild des Abschnitts der Oberfläche des Planeten, das für jedes Nutzintervall (I₁, I₂) kontinuierlicher Variation der Sichtlinie (L) in der Fokalebene (PF) erzeugt wird, sich parallel zur Spaltenreihe (C) der Fotodetektoren (30) verschiebt,
wobei das Abbildungssystem (1) **dadurch gekennzeichnet ist, dass** die Abtastvorrichtung (4) einen beweglichen Spiegel (42) oder eine bewegliche Anordnung von Spiegeln aufweist und angepasst ist, um den Spiegel oder die Anordnung von Spiegeln gemäß einer Bewegung kontinuierlicher Rotation mit gleichbleibender Rotationsrichtung, Hauptrotation genannt, drehen zu lassen und um außerdem eine Neigung des Spiegels oder mindestens eines Spiegels der Anordnung von Spiegeln während der Hauptrotation gemäß einem Hin-und-Her-Kippen zu modifizieren, wobei Perioden für die Hauptrotation und für das Hin-und-Her-Kippen identisch sind,
und dadurch, dass die Abtastvorrichtung (4) eine Spur (44), die ortsfest bezüglich der Bilderzeugungsoptik (2) ist, und ein Mitläuferelement (43), das mit dem beweglichen Spiegel (42) oder mit dem mindestens einen variabel neigbaren Spiegel der beweglichen Anordnung von Spiegeln verbunden ist, aufweist, wobei das Mitläuferelement eingerichtet ist, um während der Hauptrotation an der Spur anliegend zu bleiben, und die Spur eine Form aufweist, die angepasst ist, um via das Mitläuferelement die Neigung des beweglichen Spiegels oder des mindestens einen variabel neigbaren Spiegels der beweglichen Anordnung von Spiegeln über die gesamte Hauptrotation hinweg zu erzwingen.

2. Abbildungssystem (1) nach Anspruch 1, in welchem der Bildsensor (3) mehrere geradlinige und parallele Spaltenreihen (C) von nebeneinander angeordneten Fotodetektoren (30), die in der Fokalebene (PF) enthalten sind, aufweist, wobei eine Richtung von Zeilenreihen (R) der Fotodetektoren senkrecht zu den Spaltenreihen ist.

3. Abbildungssystem (1) nach Anspruch 2, in welchem der Bildsensor (3) des Typs Zeitverzögerungsintegration ist, wobei eine Zeitverzögerung-Anhäufungsrichtung parallel zu den Spaltenreihen (C) ist.

4. Abbildungssystem (1) nach einem der vorstehenden Ansprüche, aufweisend mehrere Bildsensoren (3₁-3₃), die in der Fokalebene (PF) angeordnet sind, wobei jeder Bildsensor mindestens eine geradlinige Spaltenreihe (C) von nebeneinander angeordneten Fotodetektoren (30) aufweist, die in der Fokalebene enthalten ist,
wobei das Bild des Abschnitts der Oberfläche des Planeten, das in der Fokalebene (PF) für jedes Nutzintervall (I₁, I₂) kontinuierlicher Variation der Sichtlinie (L) erzeugt wird, sich parallel zu der Spaltenreihe (C) von Fotodetektoren (30) jedes der Bildsensoren verschiebt, und
wobei das Abbildungssystem (1) ferner Spektralfilter aufweist, die jeweils mit den Bildsensoren (3₁-3₃) assoziiert sind und die unterschiedliche Spektralfenster bestimmen, derart, dass bei jeder Wiederholung der Bewegung der Sichtlinie Bilder eines ersten Abschnitts der Oberfläche des Planeten für alle Spektralfenster erfasst werden, wenn die Sichtlinie (L) in dem einen der zwei Nutzintervalle (I₁, I₂) kontinuierlicher Variation der Sichtlinie ist, und Bilder eines zweiten Abschnitts der Oberfläche des Planeten für alle Spektralfenster erfasst werden, wenn die Sichtlinie (L) in dem anderen der zwei Nutzintervalle kontinuierlicher Variation der Sichtlinie ist.

5. Abbildungssystem (1) nach einem der vorstehenden Ansprüche, in welchem die Abtastvorrichtung (4) angepasst ist, um während der Verwendung des Abbildungssystems an Bord des Satelliten (10) die Sichtlinie (L) an mindestens einer Position während der Bewegung, die eine geschlossene Schleife mit gleichbleibender Laufrichtung durchläuft, zwischen den zwei Nutzintervallen (I₁, I₂) kontinuierlicher Variation der Sichtlinie hin zu dem Raum außerhalb eines Limbus des Planeten zu lenken, und die Steuerung (5) konfiguriert ist, den Bildsensor (3) so zu steuern, um eine zusätzliche Bilderfassungssequenz für diese Position der Sichtlinie zu realisieren.

6. Abbildungssystem (1) nach einem der vorstehenden Ansprüche, in welchem der bewegliche Spiegel (42) oder die bewegliche Anordnung von Spiegeln des Abtastsystems (4) vor einem optischen Eingang der Bilderzeugungsoptik (2) angeordnet ist, so dass Strahlen, die von jedem Oberflächenabschnitt des Planeten ausgehen, von dem beweglichen Spiegel oder der beweglichen Anordnung von Spiegeln reflektiert werden, bevor sie in die Bilderzeugungsoptik eintreten.

7. Abbildungssystem (1) nach Anspruch 6, in welchem das Abtastsystem (4) eine bewegliche Anordnung von mindestens zwei Spiegeln aufweist, die eingerichtet ist, um die Sichtlinie (L) des Abbildungssystems bezüglich einer optischen Achse (A-A) der Bilderzeugungsoptik (2) transversal zu verschieben und um außerdem die Sichtlinie bezüglich der optischen Achse angular abzulenken, so dass, bezogen auf eine Ausbreitungsrichtung einer Strahlung, die von dem Oberflächenabschnitt des Planeten ausgeht und die das erfasste Bild erzeugt, die Sichtlinie die optische Achse vor der Bilderzeugungsoptik schräg schneidet.

8. Abbildungssystem (1) nach einem der vorstehenden Ansprüche, in welchem das Abtastsystem (4) eine bewegliche Anordnung von mindestens drei Spiegeln aufweist, wobei während eines Betriebs des Abbildungssystems jeder Spiegel eine effektive Einfallsebene hat, wobei die bewegliche Anordnung der Spiegel so konzipiert ist, dass eine beliebige parallel zu der Einfallsebene eines der mindestens drei Spiegel geradlinige Polarisationsrichtung einer durch die Abtastvorrichtung hindurchgehenden, dann in die Bilderzeugungsoptik (2) eintretenden Strahlung entweder senkrecht oder schräg bezüglich der Einfallsebene mindestens eines anderen der mindestens drei Spiegel ist.

9. Verfahren zum Erfassen von Bildern von Abschnitten einer Oberfläche eines Planeten, in welchem jeder Oberflächenabschnitt des Planeten in Bildern, die zwei unterschiedlichen Werten von Einfallswinkeln entsprechen, erfasst wird, wobei das Verfahren unter Verwendung eines Abbildungssystems (1) nach einem der vorstehenden Ansprüche durchgeführt wird, das Abbildungssystem sich an Bord eines Satelliten (10) in einer Umlaufbahn um den Planeten befindet und der eine der Einfallswinkelwerte in dem einen der zwei Nutzintervalle (I₁, I₂) kontinuierlicher Variation der Sichtlinie (L) realisiert wird und der andere der Einfallswinkelwerte in dem anderen der zwei Nutzintervalle kontinuierlicher Variation der Sichtlinie realisiert wird.

## Claims

1. A scanning imaging system (1) intended to be carried on-board a satellite (10) in orbit around a planet, to capture images of portions of a surface of the planet, each portion of the planet's surface being captured in images according to two different inclination values of a line-of-sight (L) of the imaging system with respect to said portion of the planet's surface, the imaging system comprising:
- an image forming optics (2), which are adapted to form an image in a focal plane (PF);
- at least one image sensor (3), which is arranged in the focal plane (PF);
- a scanning device (4), which is adapted to vary the line-of-sight (L) of the imaging system (1) according to a closed-loop movement and with a constant direction of travel, repeated periodically, with at least two useful intervals (I₁, I₂) of continuous variation of the line-of-sight in each repetition of the movement of the line-of-sight, which are disjoint, so that images are formed on the image sensor (3) which alternately correspond to one then to the other of both useful intervals of continuous variation of the line-of-sight; and
- a controller (5), which is configured to control the image sensor (3) so as to carry out a respective image capture sequence for each of both useful intervals (I₁, I₂) of continuous variation of the line-of-sight (L), and for each repetition of the movement of the line-of-sight during a straight motion of the satellite (10) above the surface of the planet, so that a same portion of the surface of the planet is captured in image twice, one first time when the line-of-sight is in one of both useful intervals, corresponding to one of the inclination values of the line-of-sight with respect to said portion of the planet's surface, and one second time when said line-of-sight is in the other one of both useful intervals, corresponding to the other one of the inclination values of the line-of-sight with respect to said portion of the planet's surface,
the image sensor (3) comprising at least one rectilinear column (C) of adjacent photodetectors (30) which is contained in the focal plane (PF),
and the movement of the line-of-sight (L) being adapted so that, when using the imaging system (1) on-board the satellite (10), the image of the portion of the surface of the planet that is formed in the focal plane (PF) for each useful interval (I₁, I₂) of continuous variation of the line-of-sight (L) moves parallel to the column (C) of the photodetectors (30),
the imaging system (1) being **characterised in that** the scanning device (4) comprises a movable mirror (42) or a movable set of mirrors, and is adapted to rotate said mirror or set of mirrors according to a continuous rotational movement with a constant direction of rotation, referred to as main rotation, and to further modify an inclination of the mirror or of at least one mirror of the set of mirrors during the main rotation, according to an alternating tilting, with periods for the main rotation and for the alternating tilting which are identical, and **in that** the scanning device (4) comprises a track (44) which is fixed with respect to the image forming optics (2), and a tracker element (43) which is connected to the movable mirror (42) or to the at least one variable-inclination mirror of the movable set of mirrors, the tracker element being arranged so as to remain applied on the track during the main rotation, and the track having a shape adapted to force, through the tracker element, the inclination of said movable mirror or said at least one variable-inclination mirror of the movable set of mirrors throughout said main rotation.

2. The imaging system (1) according to claim 1, wherein the image sensor (3) comprises several rectilinear and parallel columns (C) of adjacent photodetectors (30) which are contained in the focal plane (PF), with a direction (R) of rows of the photodetectors which is perpendicular to the columns.

3. The imaging system (1) according to claim 2, wherein the image sensor (3) is of time delay integration type, with a time-delay accumulation direction which is parallel to the columns (C).

4. The imaging system (1) according to any one of the preceding claims, comprising several image sensors (3₁-3₃) which are arranged in the focal plane (PF), each image sensor comprising at least one rectilinear column (C) of adjacent photodetectors (30) which is contained in said focal plane,
the image of the portion of the surface of the planet which is formed in the focal plane (PF) for each useful interval (I₁, I₂) of continuous variation of the line-of-sight (L) moving parallel to the column (C) of photodetectors (30) of each of the image sensors, and
the imaging system (1) further comprising spectral filters which are respectively associated with the image sensors (3₁-3₃), and which determine different spectral windows, so that images of a first portion of the surface of the planet are captured for all spectral windows when the line-of-sight (L) is in one of both useful intervals (I₁, I₂) of continuous variation of said line-of-sight, and images of a second portion of the surface of the planet are also captured for all spectral windows when the line-of-sight is in the other one of both useful intervals of continuous variation of the line-of-sight, at each repetition of the movement of the line-of-sight.

5. The imaging system (1) according to any one of the preceding claims, wherein the scanning device (4) is adapted to direct the line-of-sight (L) for at least one position during the closed-loop movement with constant direction of travel, between both useful intervals (I₁, I₂) of continuous variation of said line-of-sight, towards the space outside a limb of the planet when using the imaging system on-board the satellite (10), and the controller (5) is configured to control the image sensor (3) so as to carry out an additional image capture sequence for said position of the line-of-sight.

6. The imaging system (1) according to any one of the preceding claims, wherein the movable mirror (42) or the movable set of mirrors of the scanning system (4) is located in front of an optical entrance of the image forming optics (2), so that radiations originating from each portion of the planet's surface are reflected by said movable mirror or movable set of mirrors before entering said image forming optics.

7. The imaging system (1) according to claim 6, wherein the scanning system (4) comprises a movable set having at least two mirrors, which is arranged so as to transversely shift the line-of-sight (L) of the imaging system with respect to an optical axis (A-A) of the image forming optics (2), and to also angularly deflect the line-of-sight with respect to the optical axis, so that said line-of-sight obliquely intersects said optical axis upstream of the image forming optics, with respect to a direction of propagation of a radiation that originates from the portion of the planet's surface and which forms the captured image.

8. The imaging system (1) according to any one of the preceding claims, wherein the scanning device (4) comprises a movable set having at least three mirrors, each mirror having an effective plane of incidence during an operation of the imaging system, the movable set of the mirrors being designed so that any direction of rectilinear polarisation of a radiation that passes through the scanning device then penetrates the image forming optics (2) while being parallel to the plane of incidence of one of said at least three mirrors, is perpendicular or oblique to the plane of incidence of at least another one of said at least three mirrors.

9. A method for capturing images of portions of a surface of a planet, wherein each portion of the surface of the planet is captured in images according to two distinct values of angle of incidence, the method being executed using an imaging system (1) which is in accordance with any one of the preceding claims, said imaging system being on-board a satellite (10) in orbit around the planet, and one of the incidence angle values being produced in one of both useful intervals (I₁, I₂) of continuous variation of the line-of-sight (L), and the other incidence angle value being produced in the other one of said both useful intervals of continuous variation of the line-of-sight.
